# EUROPÄISCHE PATENTSCHRIFT

(11) **EP 4 135 139 B1**
(45) Veröffentlichungstag und Bekanntmachung des Hinweises auf die Patenterteilung: **21.01.2026**
(21) Anmeldenummer: 22187693.1
(22) Anmeldetag: 29.07.2022
(51) Int. Cl.: H02G 3/32, H02B 1/044, H02B 1/052, H02B 1/32, H02B 1/42, H02G 3/04, H02G 3/08

(54) **BAUTEILHALTER FÜR ELEKTROMECHANISCHE BAUTEILE**
COMPONENT HOLDER FOR ELECTROMECHANICAL COMPONENTS
PORTE-COMPOSANT POUR COMPOSANTS ÉLECTROMÉCANIQUES

(30) Priorität: 09.08.2021 DE 202021002615 U
(43) Veröffentlichungstag der Anmeldung: 15.02.2023
(73) Patentinhaber: ABN GmbH, 74196 Neuenstadt (DE)
(72) Erfinder: HÖHN, Werner, 74196 Neuenstadt (DE); ORSAG, Andrej, 74196 Neuenstadt (DE); BRAUN, Andreas, 74196 Neuenstadt (DE); BENDER, Rainer, 74196 Neuenstadt (DE); HOFMANN, Detlef, 74196 Neuenstadt (DE)
(74) Vertreter: Schmid, Barbara

(56) Entgegenhaltungen:
- EP-A1- 3 296 461
- EP-A1- 3 822 530
- US-A1- 2016 025 244
- US-A1- 2018 045 335

## Beschreibung

### TECHNISCHES GEBIET

Die Erfindung betrifft einen Bauteilhalter, mittels dem elektromechanische Bauteile an einer Metallschiene fixiert werden können. Ein solcher Bauteilhalter kann beispielsweise als Wellrohrhalter zur Befestigung und Führung von Leerrohren in Form von Wellrohren ausgebildet sein. Bei einem Wellrohr handelt es sich in der Regel um ein flexibles Rohr aus Kunststoff, das zur Installation von elektrischen Leitungen eingesetzt wird. Dadurch kann eine geordnete und geschützte Verlegung und Befestigung der Leitungen von Elektroinstallationen erreicht werden. Wellrohre können auch der Vorbereitung einer späteren Auswechslung oder Nachinstallation von kabelgebundenen Versorgungsleitungen dienen.

### STAND DER TECHNIK

Wellrohrhalter sind im Stand der Technik bereits bekannt. Die Wellrohrhalter besitzen in der Regel eine C-förmige Wellrohraufnahme, in die das Wellrohr eingeklipst werden kann. Die Wellrohraufnahme ist an einem Wellrohrfuß befestigt beziehungsweise einteilig angeformt. Dieser Wellrohrfuß kann - abhängig von seiner Ausgestaltung - beispielsweise in einer Aussparung einer Metallschiene lagefixiert werden. Alternativ dazu kann der Wellrohrfuß beispielsweise auch über einen Anschluss für eine Schraubbefestigung verfügen.

Relevanter Stand der Technik wird in US 2016/025244 A1, US 2018/045335 Al und EP3296461 Al offenbart.

### DARSTELLUNG DER ERFINDUNG

Ausgehend von diesem vorbekannten Stand der Technik liegt der Erfindung die Aufgabe zugrunde, einen verbesserten Bauteilhalter anzugeben, der möglichst einfach an unterschiedlichen Metallschienen befestigt werden kann.

Der erfindungsgemäße Bauteilhalter ist durch die Merkmale des Hauptanspruchs 1 gegeben. Sinnvolle Weiterbildungen der Erfindung sind Gegenstand von sich an diesen Anspruch anschließenden weiteren Ansprüchen.

Der erfindungsgemäße Bauteilhalter besitzt eine Befestigungseinheit, mittels der ein elektromechanisches Bauteil an dem Bauteilhalter befestigt werden kann. Darüber hinaus ist zumindest ein Halteelement vorhanden. Mittels des Halteelements kann der Bauteilhalter an einer Metallschiene befestigt werden. Erfindungsgemäß ist das Halteelement etwa L-förmig ausgebildet und weist einen ersten Schenkel und einen zweiten Schenkel auf, die etwa senkrecht zueinander angeordnet sind. An dem ersten Schenkel ist zumindest ein Hakenelement vorhanden, so dass eine Metallschiene zwischen dem Hakenelement und dem zweiten Schenkel klemmend gehalten werden kann. Um den Bauteilhalter an unterschiedlich tiefen Metallschienen befestigen zu können, können vorzugsweise zwei Hakenelemente an dem ersten Schenkel vorhanden sein. So kann ein erstes, inneres Hakenelement vorhanden sein, dessen Abstand zum zweiten Schenkel geringer ist als der Abstand des zweiten Schenkels zu einem zweiten, äußeren Hakenelement. Das erste Hakenelement kann in diesem Fall zur Befestigung an flacheren Metallschienen verwendet werden. Wird das erste Hakenelement dagegen entfernt, kann das zweite Hakenelement zum Einsatz kommen und eine Befestigung an tieferen Metallschienen ermöglichen. Um das erste Hakenelement möglichst einfach und sauber entfernen zu können, kann dieses eine Sollbruchstelle aufweisen, die vorzugsweise im Anschlussbereich des Hakenelements an dem ersten Schenkel vorhanden ist. Das erste Hakenelement kann in diesem Fall beispielsweise mittels einer Zange von dem ersten Schenkel abgebrochen werden, so dass eine Befestigung des Bauteilhalter mittels des zweiten Hakenelements möglich ist. Auf diese Weise müssen nicht unterschiedliche Bauteilhalter vorrätig gehalten werden, vielmehr ist eine rasche Anpassung der Bauteilhalters an unterschiedlich tiefe Metallschienen möglich.

An dem zweiten Schenkel des Halteelements kann vorzugsweise zumindest ein Befestigungselement vorhanden sein, um den Bauteilhalter an der Metallschiene zu fixieren. Das Befestigungselement kann in diesem Fall zumindest einen Durchbruch aufweisen, so dass eine Schraubbefestigung des Bauteilhalter an der Metallschiene möglich ist.

Vorzugsweise kann das Befestigungselement zumindest einen nach innen weisenden Rastzapfen aufweisen. Ein solcher Rastzapfen kann in eine frontseitige Aussparung der Metallschiene eingesteckt werden, so dass eine Fixierung in Längsrichtung der Metallschiene möglich ist. Vorzugsweise können zumindest zwei Rastzapfen vorhanden sein, die in benachbarte Aussparungen eingreifen können. Um trotz der Rastzapfen auch die Möglichkeit einer Schraubbefestigung zu ermöglichen, kann der zumindest eine Rastzapfen zumindest eine Sollbruchstelle aufweisen, die vorzugsweise im Anschlussbereich des Rastzapfens zu dem zweiten Schenkel des Halteelements angeordnet ist. Der zumindest eine Rastzapfen kann dadurch beispielsweise mittels einer Zange abgebrochen werden, so dass der Durchbruch in dem zweiten Schenkel mit einer der Aussparungen der Metallschiene fluchten kann und eine Schraubbefestigung möglich ist.

In einer besonders bevorzugten Ausführungsform kann der zumindest eine Rastzapfen an einer federnden Kragzunge angeformt sein. Der zumindest eine Rastzapfen kann in diesem Fall eine erste und eine zweite Außenkontur aufweisen, wobei die erste Außenkontur im Anschlussbereich der federnden Kragzunge vorhanden ist. Durch die Ausbildung von zwei unterschiedlichen Außenkonturen kann der Rastzapfen in unterschiedliche Ausnehmungen der Metallschiene eingesetzt werden. Der Bauteilhalter kann somit unabhängig von der Form der Ausnehmungen der Metallschiene positioniert werden, ohne dass eine Anpassung des Bauteilhalters erforderlich wäre. Dabei kann die erste Außenkontur, die sich im Anschlussbereich der federnden Kragzunge befindet, an die größere Ausnehmung der Metallschiene angepasst sein, während die zweite Außenkontur an die kleinere Ausnehmung der Metallschiene angepasst sein kann. In der Regel weist die größere Ausnehmung der Metallschienen eine quadratische Kontur auf, während die kleineren Ausnehmungen der Metallschienen kreisförmig sind. Entsprechend kann die erste Außenkontur des Rastzapfens etwa quadratisch oder rechteckig ausgebildet sein; die zweite Außenkontur kann entsprechend etwa kreisförmig ausgebildet sein.

Um den Rastzapfen möglichst schonend aus den Ausnehmungen der Metallschiene entfernen und den Bauteilhalter von der Metallschiene lösen zu können, kann die federnde Kragzunge etwa oberhalb des Rastzapfens ein Betätigungselement aufweisen. Ein solches Betätigungselement kann beispielsweise als Nut ausgebildet sein. In diese Nut kann mit einem Werkzeug, insbesondere mit einem Schraubendreher, eingegriffen werden, um die federnde Kragzunge anzuheben und den Rastzapfen aus der Ausnehmung zu entfernen.

An dem ersten Schenkel des Halteelements kann vorzugsweise zumindest ein Befestigungselement vorhanden sein, um den Bauteilhalter an der Metallschiene zu fixieren. Dieses Befestigungselement sollte zwischen dem zweiten Schenkel und dem ersten, inneren Hakenelement angeordnet sein. Auf diese Weise kann die Befestigungsmöglichkeit unabhängig von der Bauweise der Metallschienen wahrgenommen werden. Vorzugsweise kann das Befestigungselement zumindest einen nach innen weisenden Rastzapfen aufweisen. Ein solcher Rastzapfen kann in eine seitliche Aussparung der Metallschiene eingesetzt werden, so dass eine Fixierung in Längsrichtung der Metallschiene möglich ist. Vorzugsweise können zumindest zwei Rastzapfen vorhanden sein, die in benachbarte Aussparungen eingreifen können.

In einer besonders bevorzugten Ausführungsform kann das erste Hakenelement als Kragsteg ausgebildet sein. Das zweite, äußere Hakenelement kann in diesem Fall eine zum zweiten Schenkel weisende Umbiegung besitzen. Dabei kann das erste, innere Hakenelement im Vergleich zum zweiten, äußeren Hakenelement zurückversetzt angeordnet sein. Durch die Geometrie der unterschiedlichen Metallschienen kann ein solcher Bauteilhalter an unterschiedlichen Metallschienen befestigt werden, ohne dass das innere Hakenelement entfernt werden müsste. Ein solcher Bauteilhalter ist besonders flexibel einsetzbar, ohne dass eine besondere Anpassung an unterschiedliche Metallschienen erforderlich wäre. Im Bereich des ersten Schenkels kann darüber hinaus eine federnde Zunge vorhanden sin, die zwischen dem zweiten Schenkel und dem ersten, inneren Hakenelement verläuft. Auf der Höhe des ersten, inneren Hakenelements kann die federnde Zunge eine Hakenumbiegung aufweisen. Mittels dieser Hakenumbiegung kann sich der Bauteilhalter bei flacheren Metallschienen an dem Rand der Metallschiene festklammern, so dass eine sichere Befestigung des Bauteilhalters möglich ist. Bei tieferen Metallschienen kann die federnde Zunge dagegen entsprechend ausgelenkt werden, so dass auch die Hakenumbiegung vergleichbar dem Kragsteg zurückversetzt und eine Befestigung mittels des zweiten Hakenelements möglich ist.

In einer ersten Ausführungsform kann der Bauteilhalter als Wellrohrhalter ausgebildet sein. Die Befestigungseinheit ist in diesem Fall als C-förmige Wellrohraufnahme ausgebildet. In einer besonders bevorzugten Ausführungsform kann an zumindest einem der beiden Schenkel der Wellrohraufnahme zumindest ein Kabelhalter vorhanden sein. Auf diese Weise können durch den Wellrohrhalter zusätzlich zu dem Wellrohr auch einzelne Kabel geführt und fixiert werden. Dadurch kann auf zusätzliche Bauteile zur Fixierung und Führung der Kabel verzichtet werden, was insbesondere bei begrenzten Platzverhältnissen vorteilhaft sein kann.

Vorzugsweise kann an beiden Schenkeln der Wellrohraufnahme jeweils zumindest ein Kabelhalter vorhanden sein. Insbesondere können mehrere Kabelhalter vorhanden sein; die einzelnen Kabelhalter können dabei für unterschiedlich dicke Kabel ausgelegt sein. Der zumindest eine Kabelhalter kann vorzugsweise einteilig an dem zumindest einen Schenkel der Wellrohraufnahme angeformt sein.

Vorzugsweise können die Führungsachse der Wellrohraufnahme und die Führungsachse des zumindest einen Kabelhalters parallel zueinander verlaufen. Die von den Kabelhaltern geführten Kabel verlaufen somit parallel zu dem Wellrohr, so dass sich eine übersichtliche Führung der Kabel ergibt.

Die Führungsachse der Wellrohraufnahme und die Führungsachse des Halteelements für die Metallschiene können vorzugsweise parallel zueinander verlaufen. Das Wellrohr wird somit parallel zu der Metallschiene geführt, so dass eine platzsparende und übersichtliche Führung des Wellrohrs und damit auch der in dem Wellrohr geführten Kabel erfolgen kann.

Um ein Verrutschen des Wellrohrs in dem Wellrohrhalter zu verhindern, kann der Wellrohrhalter an seiner C-förmigen Wellrohraufnahme zumindest eine Profilfeder aufweisen, die in eine der Zickzacknute des Wellrohrs eingreifen kann. Auf diese Weise kann eine Zugentlastung des Wellrohrs erfolgen.

In einer zweiten Ausführungsform kann der Bauteilhalter eine Lochraster-Platte als Befestigungseinheit aufweisen. An einer solchen Lochraster-Platte können grundsätzlich unterschiedliche Bauteile befestigt werden. Beispielsweise können an einer solchen Lochraster-Platte entsprechende Hutschienenhalter, Wellrohrhalter, Klemmen, Abdeckungshalter oder dergleichen befestigt werden. Die Lochraster-Platte kann vorzugsweise parallel zu dem zweiten Schenkel des Halteelements angeordnet sein, so dass die Lochraster-Platte nach der Montage des Bauteilhalters etwa vertikal ausgerichtet ist und eine frontseitige Befestigung der einzelnen Bauteile ermöglicht.

Die Lochraster-Platte kann im Bereich des ersten Schenkels des Halteelements angeordnet sein. In diesem Fall liegt die Lochraster-Platte etwa auf einer Höhe mit der Metallschiene, so dass die einzelnen Bauteile mittels der Lochraster-Platte neben der Metallschiene angeordnet werden können.

Alternativ dazu kann die Lochraster-Platte über einen Abstandshalter an dem Halteelement befestigt sein. Der Abstandshalter kann in diesem Fall mit dem ersten Schenkel des Halteelements fluchten. Auf diese Weise liegt die Lochraster-Platte mit einem gewissen Abstand oberhalb der Metallschiene, so dass die einzelnen Bauteile mittels der Lochraster-Platte oberhalb der Metallschiene angeordnet werden können.

In einer dritten Ausführungsform kann die zumindest eine Befestigungseinheit als Hutschiene oder als T-Schiene ausgebildet sein. Die Hutschiene beziehungsweise die T-Schiene kann vorzugsweise parallel zu dem zweiten Schenkel des Halteelements ausgerichtet sein, so dass eine frontseitige Montage der Bauteile an der Hutschiene beziehungsweise T-Schiene möglich ist. Die Hutschiene beziehungsweise die T-Schiene kann dabei im Bereich des ersten Schenkels des Halteelements oder in Verlängerung des zweiten Schenkels des Halteelements angeordnet sein.

In einer vierten Ausführungsform kann die zumindest eine Befestigungseinheit als Hutschienenhalter ausgebildet sein. Der Hutschienenhalter kann in diesem Fall zwei seitliche Führungsnute aufweisen, in denen jeweils ein Rand einer Hutschiene positioniert werden kann. Eine der beiden seitlichen Führungsnute kann in diesem Fall stationär ausgebildet sein, während die andere der beiden seitlichen Führungsnute einen beweglichen Rasthaken aufweisen kann. Dieser bewegliche Rasthaken kann die Oberseite der Führungsnut bilden. Die Hutschiene kann somit zunächst schräg in die stationäre Führungsnut eingesetzt werden. Anschließend wird die Hutschiene von oben an der Rastnase des beweglichen Rasthakens vorbeigeführt, so dass der Rasthaken entsprechend ausgelenkt wird. Der Rand der Hutschiene kann nach dem Zurückschnappen des beweglichen Rasthakens dann sicher in der Führungsnut gehalten sein. Eine solche Ausbildung mit einer stationären und einer beweglichen Führungsnut hat den Vorteil, dass einerseits durch die bewegliche Führungsnut die Einführung der Hutschiene erleichtert wird, andererseits durch die stationäre Führungsnut jedoch eine ausreichende Stabilität gewährleistet werden kann. Bei der Ausbildung von zwei beweglichen Führungsnuten würde dagegen die Gefahr bestehen, dass sich die Hutschiene bei größeren Belastungen aus ihrer Befestigung löst. Da auf den Hutschienen in der Regel auch schwere Geräte montiert werden können, ist hier eine sichere und stabile Befestigung des Hutschienenhalters jedoch besonders wichtig.

Vorzugsweise kann der bewegliche Rasthaken eine Rastnase mit einer konvexen Außenkontur aufweisen. Die gebogene, abgerundete Außenkontur hat den Vorteil, dass es bei dem Entlanggleiten des Randes der Hutschiene zu einer leichteren Auslenkung des Rasthakens kommt. Die Auslenkung des Rasthakens benötigt daher einen geringeren Kraftaufwand, so dass die Montage der Hutschiene deutlich erleichtert wird.

An dem ersten Schenkel des Halteelements kann eine zweite Befestigungseinheit für ein weiteres elektromechanisches Bauteil vorhanden sein. Bei dieser zweiten Befestigungseinheit kann es sich beispielsweise um eine weitere Lochraster-Platte handeln. Alternativ dazu kann die zweite Befestigungseinheit zumindest eine Nut und/oder zumindest eine Feder einer Nut-Feder-Verbindung aufweisen.

Der erfindungsgemäße Bauteilhalter basiert auf dem Grundgedanken der schraubenlosen oder werkzeuglosen Technik. Der Bauteilhalter lässt sich daher vollständig ohne Werkzeuge montieren, da keinerlei Schraubbefestigungen erforderlich sind. Dadurch kann die Montagezeit deutlich reduziert werden.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine perspektivische Darstellung einer ersten Ausführungsform des erfindungsgemäßen Bauteilhalters, bei dem der Bauteilhalter als Wellrohrhalter ausgebildet ist,
- Fig. 2: eine weitere perspektivische Darstellung des Wellrohrhalters gemäß Fig. 1,
- Fig. 3: eine perspektivische Darstellung des an einer Metallschiene montierten Wellrohrhalters gemäß Fig. 1 und 2,
- Fig. 4: eine perspektivische Darstellung eines an einer alternativen Metallschiene montierten Wellrohrhalters gemäß Fig. 1 und 2,
- Fig. 5: eine perspektivische Darstellung des Wellrohrhalters gemäß Fig. 3 mit eingesetzten Kabeln und eingesetztem Wellrohr,
- Fig. 6: eine perspektivische Darstellung einer zweiten Ausführungsform des erfindungsgemäßen Bauteilhalters, bei dem die Befestigungseinheit als Lochraster-Platte ausgebildet ist,
- Fig. 7: eine perspektivische Darstellung des an einer Metallschiene befestigten Bauteilhalters gemäß Fig. 6 mit an der Lochraster-Platte befestigtem Hutschienenhalter,
- Fig. 8: eine perspektivische Darstellung einer dritten Ausführungsform des erfindungsgemäßen Bauteilhalters mit einer ersten Befestigungseinheit als Lochraster-Platte und einer zweiten Befestigungseinheit mit zwei Nuten für eine Nut-Feder-Verbindung,
- Fig. 9: eine weitere perspektivische Darstellung des Bauteilhalters gemäß Fig. 8,
- Fig. 10: eine perspektivische Darstellung des an einer Metallschiene befestigten Bauteilhalters gemäß Fig. 8 und 9 mit an der Lochraster-Platte befestigtem Hutschienenhalter,
- Fig. 11: eine perspektivische Darstellung des an einer Metallschiene befestigten Bauteilhalters gemäß Fig. 8 und 9 mit an den Nuten befestigter Klemme,
- Fig. 12: eine perspektivische Darstellung einer vierten Ausführungsform des erfindungsgemäßen Bauteilhalters mit einer als T-Schiene ausgebildeten Befestigungseinheit,
- Fig. 13: eine weitere perspektivische Darstellung des Bauteilhalters gemäß Fig. 12,
- Fig. 14: eine perspektivische Darstellung einer fünften Ausführungsform des erfindungsgemäßen Bauteilhalters mit einer als Hutschiene ausgebildeten Befestigungseinheit,
- Fig. 15: eine perspektivische Darstellung des an einer Metallschiene befestigten Bauteilhalters gemäß Fig. 12 und 13 mit an der T-Schiene befestigter Klemme,
- Fig. 16: einen Schnitt durch eine sechste Ausführungsform des an einer Metallschiene montierten erfindungsgemäßen Bauteilhalters mit einer als Hutschienenhalter ausgebildeten Befestigungseinheit,
- Fig. 17: eine perspektivische Ansicht des an der Metallschiene montierten Bauteilhalters gemäß Fig. 16,
- Fig. 18: eine perspektivische Ansicht des losen Bauteilhalters gemäß Fig. 16 und 17,
- Fig. 19: eine zweite perspektivische Ansicht des losen Bauteilhalters gemäß Fig. 18,
- Fig. 20: einen Schnitt durch den an einer alternativen Metallschiene montierten Bauteilhalter gemäß Fig. 16 bis 19,
- Fig. 21: einen zweiten Schnitt durch den an der Metallschiene montierten Bauteilhalter gemäß Fig. 20,
- Fig. 22: eine perspektivische Ansicht des an der Metallschiene montierten Bauteilhalters gemäß Fig. 20 und 21, und
- Fig. 23: eine zweite perspektivische Ansicht des montierten Bauteilhalters gemäß Fig. 22.

### WEGE ZUM AUSFÜHREN DER ERFINDUNG

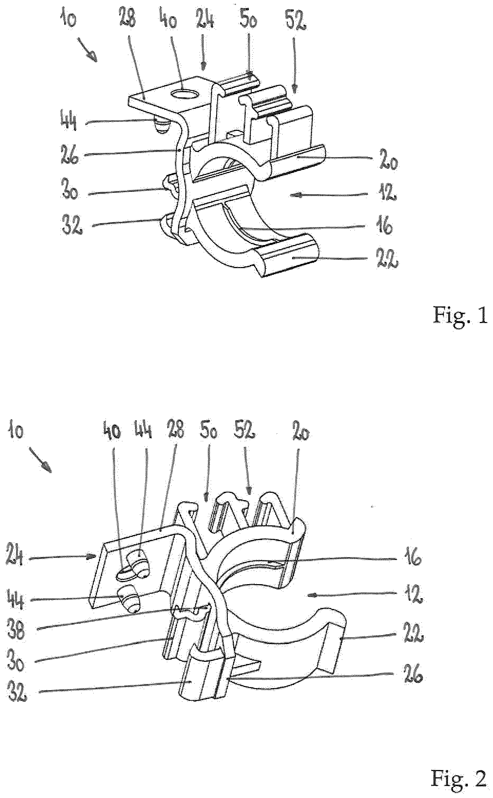

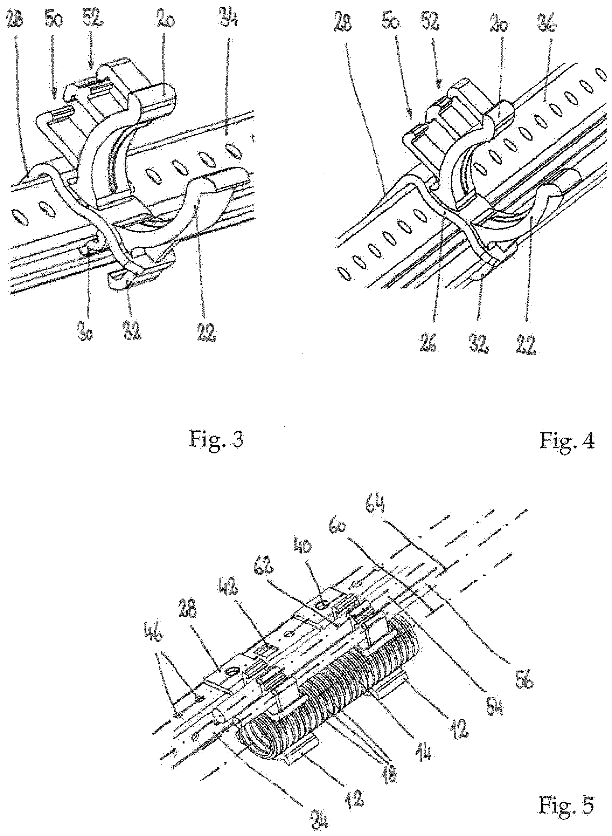

Eine erste Ausführungsform des erfindungsgemäßen Bauteilhalters 10 ist in den Fig. 1 und 2 perspektivisch dargestellt. Der Bauteilhalter 10 ist in diesem Fall als Wellrohrhalter ausgebildet. Der Wellrohrhalter 10 besitzt eine C-förmige Wellrohraufnahme 12 als Befestigungseinheit, in die ein Wellrohr 14 eingeklipst werden kann (siehe Fig. 5). Die Wellrohraufnahme 12 besitzt eine innen umlaufende Profilfeder 16. Diese Profilfeder 16 kann in eine Nut 18 des Wellrohrs 14 eingreifen, so dass das Wellrohr 14 lagefixiert und zugentlastet in der Wellrohraufnahme 12 gehalten wird.

Die C-förmige Wellrohraufnahme 12 besitzt zwei Schenkel 20, 22, die an einem Halteelement 24 einteilig angeformt sind. Das Halteelement 24 ist etwa L-förmig ausgebildet und besitzt einen ersten Schenkel 26 und einen zweiten Schenkel 28, die etwa senkrecht zueinander ausgerichtet sind. An dem ersten Schenkel 26 des Halteelements 24 sind die beiden Schenkel 20, 22 der Wellrohraufnahme 12 vorhanden.

Im vorliegenden Beispielsfall sind an der von der Wellrohraufnahme 12 weg gerichteten Seite des ersten Schenkels 26 ein erstes, inneres Hakenelement 30 sowie ein zweites, äußeres Hakenelement 32 einteilig angeformt. Der Abstand zwischen dem ersten Hakenelement 30 und dem zweiten Schenkel 28 ist so gewählt, dass eine Metallschiene 34 mit einer Tiefe von etwa 15 Millimetern zwischen dem ersten Hakenelement 30 und dem zweiten Schenkel 28 klemmend gehalten werden kann, so dass auf diese Weise eine Befestigung des Wellrohrhalters 10 an der Metallschiene 34 möglich ist.

Um den Wellrohrhalter 10 auch an einer tieferen Metallschiene 36 (siehe Fig. 4) befestigen zu können, weist das innere Hakenelement 30 eine Sollbruchstelle 38 auf, die unmittelbar im Anschlussbereich an den ersten Schenkel 26 des Halteelements 24 vorhanden ist. An dieser Sollbruchstelle 38 kann das erste Hakenelement 30 insbesondere mittels einer Zange abgebrochen worden, so dass die Metallschiene 36 zwischen dem zweiten Schenkel 28 und dem äußeren Hakenelement 32 klemmend gehalten werden kann.

An dem zweiten Schenkel 28 des Halteelements 24 ist im vorliegenden Beispielsfall ein mittiger Durchbruch 40 vorhanden. Dieser mittige Durchbruch 40 kann für eine hier nicht dargestellte Schraubbefestigung verwendet werden. Der Durchbruch 40 dient somit als Befestigungselement zur Fixierung des Wellrohrhalters 10 in Längsrichtung 42 und in Querrichtung der Metallschiene 34, 36.

Darüber hinaus sind im vorliegenden Beispielsfall zwei nach innen weisende Rastzapfen 44 einteilig an dem zweiten Schenkel 28 angeformt. Die beiden Rastzapfen 44 können in Aussparungen 46 der Metallschiene 34, 36 eingreifen, so dass ebenfalls eine Fixierung des Wellrohrhalters 10 in Längsrichtung 42 der Metallschiene 34, 36 möglich ist. Die Rastzapfen 44 dienen somit ebenfalls als Befestigungselement. Die Rastzapfen 44 sind im vorliegenden Beispielsfall so angeordnet, dass der Durchbruch 40 nicht mit einer Aussparung 46 der Metallschiene 34, 36 fluchtet, sofern die Rastzapfen 44 in die Aussparungen 46 eingreifen. Um den Wellrohrhalter 10 daher mittels einer Schraubbefestigung an der Metallschiene 34, 36 montieren zu können, müssen die Rastzapfen 44 entfernt werden. Die Rastzapfen 44 können daher eine hier nicht dargestellte Sollbruchstelle aufweisen, die vorzugsweise unmittelbar im Anschlussbereich zu dem zweiten Schenkel 28 des Halteelements 24 angeordnet sein sollte. Die Rastzapfen 44 können daher bei Bedarf insbesondere mittels einer Zange abgebrochen werden, so dass eine Schraubbefestigung möglich ist.

Bei einer breiteren Ausbildung des zweiten Schenkels 28 des Halteelements 24, bei der mehr Aussparungen 46 der Metallschiene 34 von dem zweiten Schenkel 28 überdeckt werden, könnten die Rastzapfen 44 auch so angeordnet werden, dass der Durchbruch 40 mit einer der Aussparungen 46 der Metallschiene 34 fluchten kann. In diesem Fall könnte auf die Sollbruchstelle der Rastzapfen 44 auch verzichtet werden.

Im vorliegenden Beispielsfall sind an dem zu dem zweiten Schenkel 28 des Halteelements 24 gerichteten Schenkel 20 der Wellrohraufnahme 12 zwei Kabelhalter 50, 52 einteilig angeformt. Dabei ist der Kabelhalter 50 für Kabel 54 mit einem Durchmesser von vier bis neun Millimetern ausgelegt, während der Kabelhalter 52 für Kabel 56 mit einem Durchmesser von drei bis sieben Millimetern ausgelegt ist (siehe Fig. 5).

Im Gegensatz zu dem hier dargestellten Ausführungsbeispiel könnten auch mehr oder weniger Kabelhalter 50, 52 an dem Schenkel 20 vorhanden sein. Zusätzlich oder alternativ dazu könnten auch an dem anderen Schenkel 22 der Wellrohraufnahme 12 ein oder mehrere Kabelhalter 50, 52 vorhanden sein. Die einzelnen Kabelhalter 50, 52 könnten ebenfalls über Sollbruchstellen mit den Schenkeln 20, 22 der Wellrohraufnahme 12 verbunden sein, so dass die nicht benötigten Kabelhalter 50, 52 bei Bedarf entfernt werden können.

Um eine übersichtliche Führung des Wellrohrs 14 und der Kabel 54, 56 zu ermöglichen, verläuft die Führungsachse 60 der Wellrohraufnahme 12 (entspricht der Längsrichtung des Wellrohrs 14) parallel zu der Führungsachse 42 des Halteelements 24 (entspricht der Längsrichtung 42 der Metallschiene 34, 36). Das Wellrohr 14 verläuft somit parallel zu der Metallschiene 34, 36, an denen der Wellrohrhalter 14 befestigt ist. Auch die Führungsachsen 62, 64 der beiden Kabelhalter 50, 52 verlaufen parallel zu der Führungsachse 60 der Wellrohraufnahme 12. Somit verlaufen auch die Kabel 54, 56 parallel zu dem Wellrohr 14 und damit auch parallel zu den Metallschienen 34, 36.

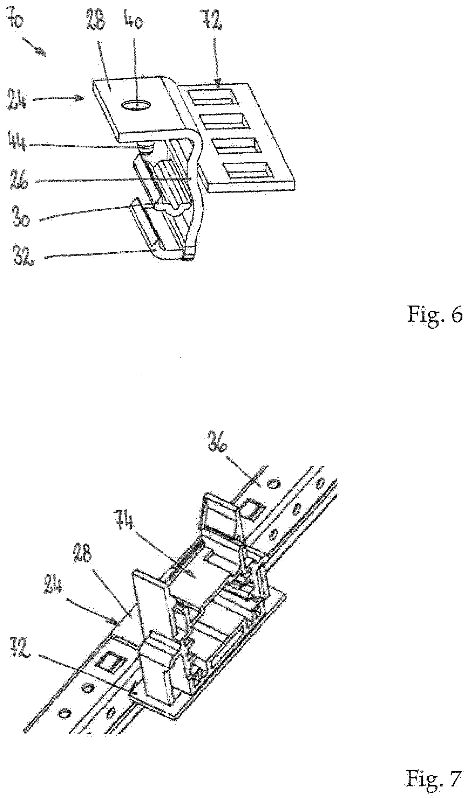

Eine zweite Ausführungsform des erfindungsgemäßen Bauteilhalters 70 ist in Fig. 6 und 7 perspektivisch dargestellt. Der Bauteilhalter 70 besitzt ein Halteelement 24, wie es im Zusammenhang mit dem Wellrohrhalter 10 bereits beschrieben worden ist. Die Befestigungseinheit 72 des Bauteilhalters 70 ist dagegen als Lochraster-Platte 72 ausgebildet. Die Lochraster-Platte 72 verläuft parallel zu dem zweiten Schenkel 28 des Halteelements 24. Die Lochraster-Platte 72 ist von dem zweiten Schenkel 28 weg gerichtet und einteilig an dem ersten Schenkel 26 angeformt. Dabei ist die Lochraster-Platte 72 etwa mittig zwischen dem inneren Hakenelement 30 und dem zweiten Schenkel 28 angeordnet. Die Größe der Lochraster-Platte 72 kann grundsätzlich frei gewählt werden. In der Regel sollte die Lochraster-Platte 72 jedoch nur eine bis maximal zwei Spalten an Lochraster aufweisen, damit die Stabilität der Befestigung des Bauteilhalters 70 an der Metallschiene 34, 36 noch gegeben ist. Abhängig von der erforderlichen Länge der Lochraster-Platte 72 könnten auch mehrere Halteelemente 24 vorgesehen werden, so dass hier keine Einschränkungen bezüglich der Stabilität gegeben sein sollten.

Wird der Bauteilhalter 70 an einer Metallschiene 36 (siehe Fig. 7) oder 34 befestigt, liegt die Lochraster-Platte 72 neben der Metallschiene 36, 34. An der Lochraster-Platte 72 kann beispielsweise ein Hutschienenhalter 74 befestigt werden, wie dies in Fig. 7 dargestellt ist. Statt des Hutschienenhalters 74 könnten auch andere Bauteile, die an einem entsprechenden Lochraster fixiert werden können, an dem Bauteilhalter 70 befestigt werden.

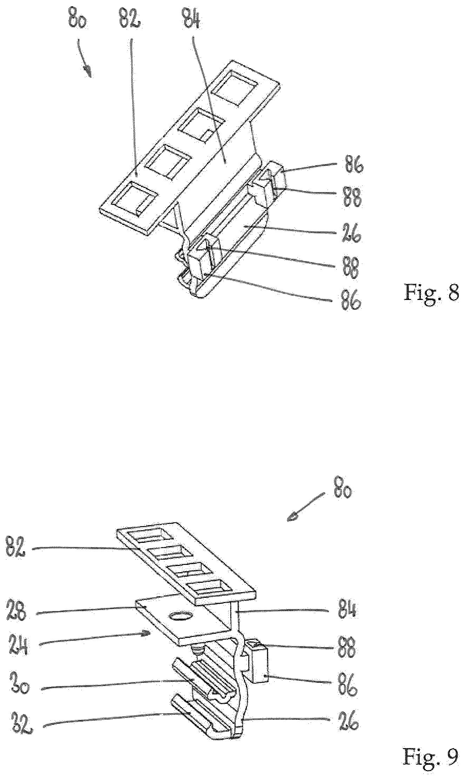

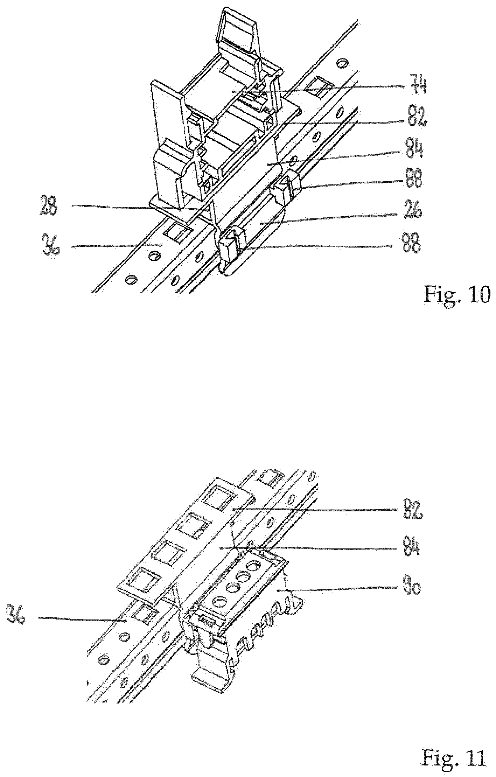

Eine dritte Ausführungsform des erfindungsgemäßen Bauteilhalters 80 ist in Fig. 8 und 9 perspektivisch dargestellt. Der Bauteilhalter 80 besitzt ein Halteelement 24, wie es im Zusammenhang mit dem Wellrohrhalter 10 bereits beschrieben worden ist. Der Bauteilhalter 80 besitzt im vorliegenden Beispielsfall eine erste Befestigungseinheit 82, die als Lochraster-Platte 82 ausgebildet ist. Die Lochraster-Platte 82 ist über einen Abstandshalter 84 einteilig an dem Halteelement 24 angeformt. Der Abstandshalter 84 fluchtet dabei mit dem ersten Schenkel 26 des Halteelements 24. Wird der Bauteilhalter 80 an einer Metallschiene 34, 36 befestigt (siehe Fig. 10), befindet sich die Lochraster-Platte 82 oberhalb dieser Metallschiene 34, 36. An der Lochraster-Platte 82 kann beispielsweise ein Hutschienenhalter 74 befestigt werden. Neben der Lochraster-Platte 82 besitzt der Bauteilhalter 80 eine zweite Befestigungseinheit, die im vorliegenden Beispielsfall zwei Kragelemente 86 mit jeweils einer Nut 88 aufweist. Die Kragelemente 86 mit den Nuten 88 sind jeweils an den beiden Randbereichen des ersten Schenkels 26 des Halteelements 24 einteilig angeformt. Die Kragelemente 86 befinden sich dabei etwa mittig zwischen dem zweiten Schenkel 28 des Halteelements 24 und dem inneren Hakenelement 30. In die Nute 88 kann ein geeignetes Bauteil 90 mit entsprechenden Federn eingeschoben werden, wie dies beispielhaft in Fig. 11 dargestellt ist. Das Bauteil 90 ist im vorliegenden Beispielsfall als Klemme 90 ausgebildet.

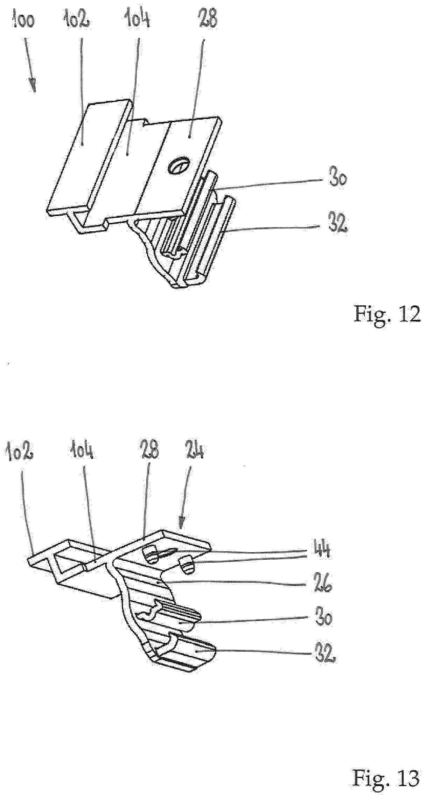

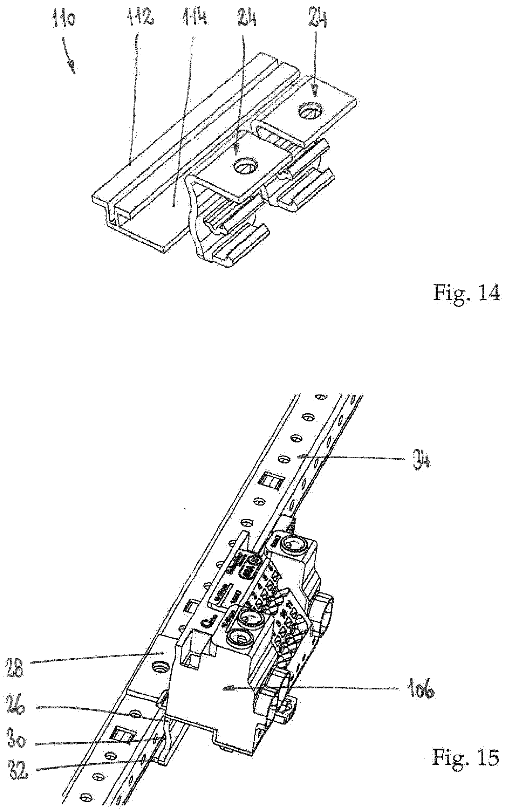

Eine vierte Ausführungsform des erfindungsgemäßen Bauteilhalters 100 ist in Fig. 12 und 13 perspektivisch dargestellt. Der Bauteilhalter 100 besitzt ein Halteelement 24, wie es im Zusammenhang mit dem Wellrohrhalter 10 bereits beschrieben worden ist. Die Befestigungseinheit 102 ist als T-Schiene 102 ausgebildet. Die T-Schiene 102 verläuft parallel zu dem zweiten Schenkel 28 des Halteelements 24 und ist über eine Verbindungsplatte 104 einteilig mit dem Halteelement 24 verbunden. Die Verbindungsplatte 104 fluchtet dabei mit dem zweiten Schenkel 28 des Halteelements 24. An der T-Schiene 102 kann beispielsweise eine Klemme 106 (siehe Fig. 15) befestigt werden. Abhängig von der gewünschten Länge der T-Schiene 102 könnten auch mehrere Halteelemente 24 vorgesehen werden.

Eine fünfte Ausführungsform des erfindungsgemäßen Bauteilhalters 110 ist in Fig. 14 perspektivisch dargestellt. Der Bauteilhalter 110 besitzt zwei Halteelemente 24, wie sie im Zusammenhang mit dem Wellrohrhalter 10 bereits beschrieben worden sind. Die Befestigungseinheit 112 ist als Hutschiene 112 ausgebildet. Die Hutschiene 112 verläuft parallel zu den beiden zweiten Schenkeln 28 der Halteelemente 24 und ist über eine Verbindungsplatte 114 einteilig mit den beiden Halteelementen 24 verbunden. Die Verbindungsplatte 114 ist etwa auf der Höhe der inneren Hakenelemente 30 an den ersten Schenkeln 26 der Halteelemente 24 angeformt. An der Hutschiene 112 können unterschiedliche Bauteile befestigt werden. Abhängig von der Länge der Hutschiene 112 kann auch ein einzelnes Halteelement 24 ausreichend sein. Bei längeren Hutschienen 112 können dagegen auch weitere Halteelemente 24 vorgesehen werden.

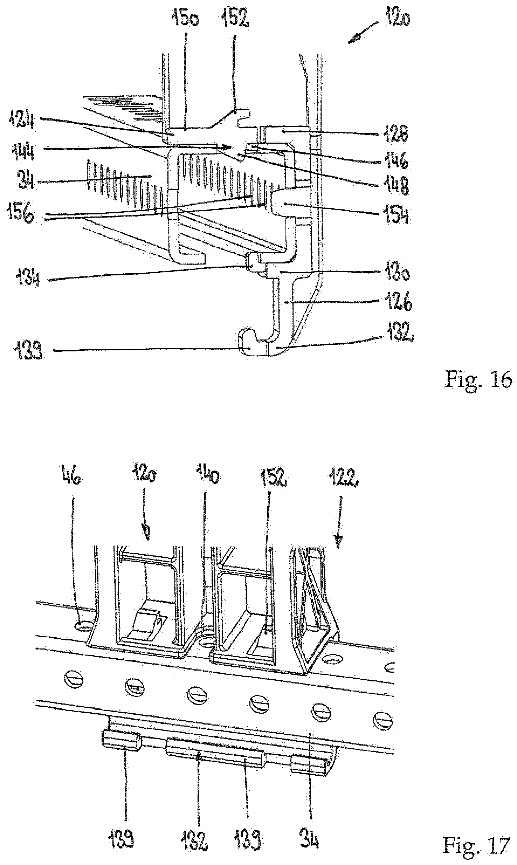

Eine sechste Ausführungsform des erfindungsgemäßen Bauteilhalters 120 ist in den Fig. 16 bis 19 dargestellt. Die Befestigungseinheit 122 ist im vorliegenden Beispielsfall als Hutschienenhalter 122 ausgebildet. Der Hutschienenhalter 122 ist an einem Halteelement 124 einteilig angeformt. Das Halteelement 124 ist etwa L-förmig ausgebildet und besitzt einen ersten Schenkel 126 und einen zweiten Schenkel 128, die etwa senkrecht zueinander ausgerichtet sind. An dem zweiten Schenkel 128 des Halteelements 124 ist der Hutschienenhalter 122 einteilig angeformt.

Im vorliegenden Beispielsfall sind an dem ersten Schenkel 126 ein erstes; inneres Hakenelement 130 sowie ein zweites, äußeres Hakenelement 132 einteilig angeformt. Der Abstand zwischen dem ersten Hakenelement 130 und dem zweiten Schenkel 128 ist so gewählt, dass eine Metallschiene 34 mit einer Tiefe von etwa 15 Millimetern zwischen dem ersten Hakenelement 130 und dem zweiten Schenkel 128 klemmend gehalten werden kann, so dass auf diese Weise eine Befestigung des Bauteilhalters 120 an der Metallschiene 34 möglich ist (siehe Fig. 16).

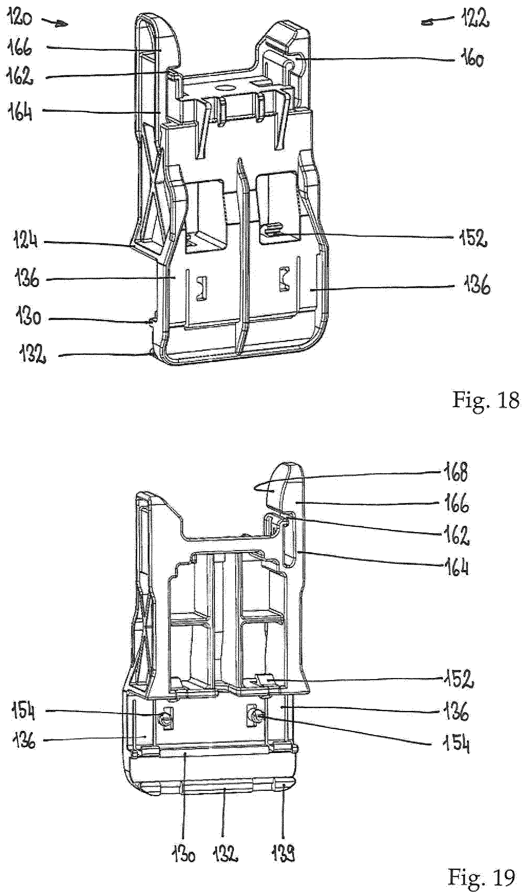

Das erste Hakenelement 130 ist als Kragsteg ausgebildet und gegenüber dem zweiten, äußeren Hakenelement 132 ein Stück zurückversetzt. Dabei ist der Kragsteg 130 nicht durchgehend über den gesamten Bereich des Bauteilhalters 120 ausgebildet. Vielmehr weist der Kragsteg 130 im Randbereich des Bauteilhalters 120 zwei Lücken auf (siehe insbesondere Fig. 19). Im Bereich dieser Lücken ist jeweils die Hakenumbiegung 134 einer federnde Zunge 136 vorhanden. Die federnden Zungen 136 verlaufen dabei im Wesentlichen über den gesamten Bereich zwischen dem zweiten Schenkel 128 und dem ersten Hakenelement 130.

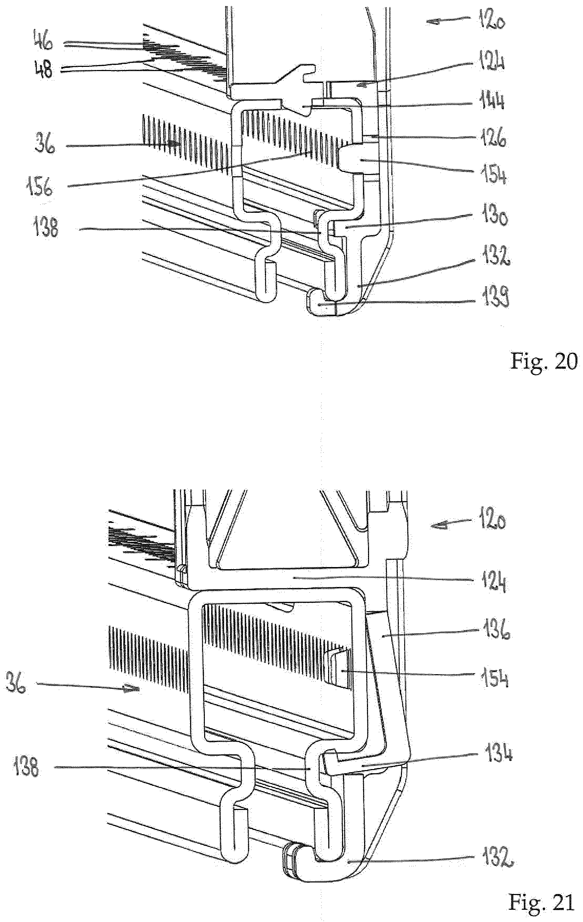

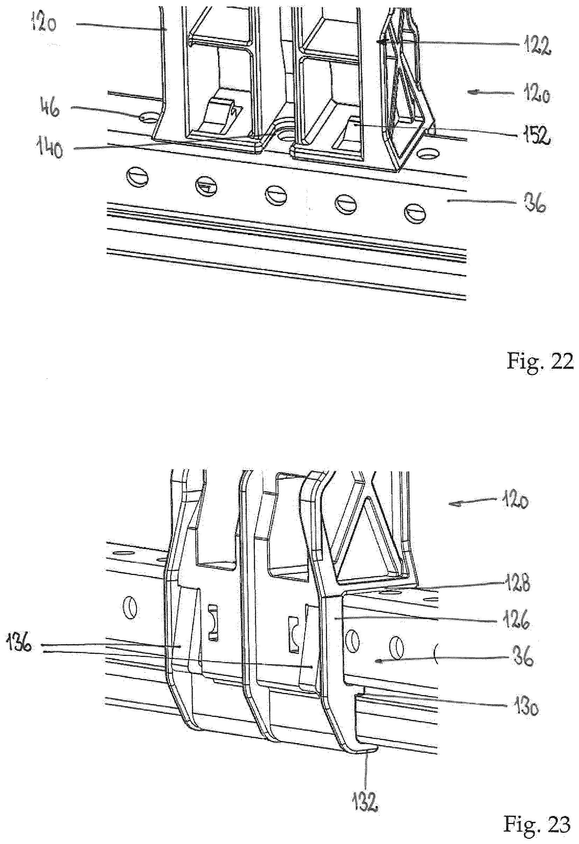

Um den Bauteilhalter auch an einer tieferen Metallschiene 36 befestigen zu können (siehe Fig. 20 und 21), ist das innere Hakenelement 130 im Vergleich zu dem zweiten Hakenelement 132 ein Stück weit zurückversetzt. Dadurch kann das als Kragsteg 130 ausgebildete innere Hakenelement 130 in der bei einer tieferen Metallschiene 36 vorhandenen Nut 138 einsitzen, ohne dass der Kragsteg 130 entfernt werden müsste. Die federnde Zunge 136 wird dabei von der Nut 138 der Metallschiene 36 nach hinten ausgelenkt (siehe Fig. 23). Dabei kann es gegebenenfalls zu einem Abbrechen der federnden Zunge 136 kommen. Es ist jedoch nicht erforderlich, die federnde Zunge 136 planmäßig und gewollt zu entfernen, so dass ein solcher zusätzlicher Arbeitsschritt bei der Montage des Bauteilhalters 120 entfallen kann.

Das äußere Hakenelement 132 kann in diesem Fall mit seiner zum zweiten Schenkel 128 weisenden Umbiegung 139 den Rand der Metallschiene 36 umklammern, so dass die Metallschiene 36 zwischen dem zweiten Schenkel 128 und dem äußeren Hakenelement 132 klemmend gehalten werden kann.

An dem zweiten Schenkel 128 des Halteelements 124 ist im vorliegenden Beispielsfall ein mittiger Durchbruch 140 vorhanden. Dieser mittige Durchbruch 140 kann für eine hier nicht dargestellte Schraubbefestigung verwendet werden. Der Durchbruch 140 dient somit als Befestigungselement zur Fixierung des Bauteilhalters 120 in Längsrichtung 42 und in Querrichtung der Metallschiene 34, 36.

Darüber hinaus sind im vorliegenden Beispielsfall zwei nach innen weisende Rastzapfen 144 einteilig an dem zweiten Schenkel 128 angeformt. Die Rastzapfen 144 können in Aussparungen 46 der Metallschiene 34, 36 eingreifen, so dass ebenfalls eine Fixierung des Bauteilhalters 120 in Längsrichtung 42 der Metallschiene 34, 36 möglich ist. Die Rastzapfen 144 dienen somit ebenfalls als Befestigungselement. Die Rastzapfen 144 sind im vorliegenden Beispielfall so angeordnet, dass der Durchbruch 40 mit einer Aussparung 46, 48 der Metallschiene 34, 36 fluchtet, wenn die Rastzapfen 144 in die Aussparungen 46, 48 eingreifen. Daher können beide Befestigungsmöglichkeiten für den zweiten Schenkel 128 des Halteelements 124 parallel genutzt werden.

Die Metallschiene 34, 36 weist in der Regel zwei unterschiedliche Aussparungen 46, 48 auf. Die Mehrzahl der Aussparungen 46 weist einen kreisförmigen Querschnitt auf. In größeren Abständen befindet sich statt der kreisförmigen Aussparungen 46 alternative Aussparungen 48, die einen etwa quadratischen Querschnitt aufweisen. Damit die Rastzapfen 144 in beiden Aussparungen 46, 48 eingreifen können, weisen die Rastzapfen 144 zwei unterschiedliche Außenkonturen 146, 148 auf (siehe Fig. 16). Im Anschlussbereich der Rastzapfens 144 weist der Rastzapfen 144 eine erste Außenkontur 146 auf, die etwa quadratisch oder rechteckig ausgebildet ist. Diese erste Außenkontur 146 ist an die größeren Aussparungen 48 der Metallschiene 34, 36 angepasst, so dass der Rastzapfen 144 in die Aussparungen 48 eingesetzt werden kann. Unterhalb der ersten Außenkontur 146 befindet sich eine zweite, unterschiedliche Außenkontur 148 des Rastzapfens 144. Diese zweite Außenkontur 148 ist etwa kreisförmig ausgebildet und kann somit in die Aussparungen 46 eingesetzt werden.

Da die Aussparungen 46 deutlich kleiner sind als die Aussparungen 48, ist der Rastzapfen 144 jeweils an einer federnden Kragzunge 150 angeformt. Durch die federnde Kragzunge 150 kann der Rastzapfen 144 in Stück weit nach oben von der Metallschiene 34, 36 weg gedrückt werden, so dass die Rastzapfen 144 mit seiner kreisförmigen, zweiten Außenkontur 148 in den kleineren, runden Aussparungen 46 der Metallschiene 34, 36 eingreifen kann.

Um die Rastzapfen 144 planmäßig aus den Aussparungen 46, 48 der Metallschiene 34, 36 zu lösen und den Bauteilhalter 120 von der Metallschiene 34, 36 zu entfernen, ist oberhalb des Rastzapfens 144 jeweils ein Betätigungselement 152 an der federnden Kragzunge 150 angeformt. Das Betätigungselement 152 ist im vorliegenden Beispielsfall als Nut ausgebildet. In diese Nut 152 kann mit einem geeigneten Werkzeug, insbesondere mit einem Schraubendreher, eingegriffen werden. Dadurch kann die federnde Kragzunge 150 ein Stück weit angehoben werden, so dass der Rastzapfen 144 aus der Aussparung 46, 48 entfernt wird.

An dem ersten Schenkel 126 des Halteelements 124 sind im vorliegenden Beispielsfall zwei nach innen weisende Rastzapfen 154 vorhanden. Die Rastzapfen 154 sind dabei jeweils neben den federnden Zungen 136 angeordnet. Die Rastzapfen 154 können in seitliche Aussparungen 156 der Metallschiene 34, 36 eingreifen, so dass eine Fixierung des Bauteilhalters 120 in Längsrichtung 42 der Metallschiene 34, 36 möglich ist. Die Rastzapfen 154 dienen somit als zusätzliches Befestigungselement für den ersten Schenkel 126 des Halteelements 124.

Der Hutschienenhalter 122 besitzt zwei seitliche Führungsnute 160, 162, in denen jeweils ein Rand einer Hutschiene positioniert werden kann (siehe Fig. 18 und 19). Im vorliegenden Beispielsfall ist eine der beiden seitlichen Führungsnute 160 stationär ausgebildet. Die stationäre Führungsnut 160 ist nicht beweglich, so dass die Hutschiene zunächst mit einem Rand in diese stationäre Führungsnut 160 eingesetzt wird. Die andere der beiden Führungsnute 162 weist dagegen einen beweglichen Rasthaken 164 auf. Die Rastnase 166 des Rasthakens 164 bildet in diesem Fall die Oberseite der Führungsnut 162. Um die Hutschiene in den Hutschienenhalter 122 einzusetzen, wird diese zunächst mit ihrem einen Randbereich schräg in die stationäre Führungsnut 160 eingesetzt. Anschließend wird die Hutschiene von oben an der Rastnase 166 des beweglichen Rasthakens 164 vorbeigeführt, dabei wird der Rasthaken 164 entsprechend ausgelenkt. Nach dem Zurückschnappen des beweglichen Rasthakens 164 wird auch dieser Rand der Hutschiene sicher in der Führungsnut 162 gehalten. Die Rastnase 166 des beweglichen Rasthakens 164 weist im vorliegenden Beispielsfall eine konvexe Außenkontur 168 aufweisen. Eine solche Außenkontur 168 hat den Vorteil, dass es bei dem Entlanggleiten des Randes der Hutschiene zu einer einfacheren Auslenkung des Rasthakens 164 kommt. Die Auslenkung des Rasthakens 164 benötigt daher einen geringeren Kraftaufwand, so dass die Montage der Hutschiene deutlich erleichtert wird.

## Patentansprüche

1. Bauteilhalter (10, 70, 80, 100, 110, 120) zur Befestigung von elektromechanischen Bauteilen (14, 54, 56, 74, 90, 106, 112) an einer Metallschiene (34, 36),
- mit zumindest einer Befestigungseinheit (12, 50, 52, 72, 82, 88, 102, 112, 122) für ein elektromechanisches Bauteil (14, 54, 56, 74, 90, 106),
- mit zumindest einem etwa L-förmig ausgebildeten Halteelement (24, 124), mittels dem der Bauteilhalter (10, 70, 80, 100, 110, 120) an der Metallschiene (34, 36) fixierbar ist, wobei das Halteelement (24, 124) einen ersten Schenkel (26, 126) und einen zweiten Schenkel (28, 128) aufweist wobei
- an dem ersten Schenkel (26, 126) zumindest ein erstes, inneres Hakenelement (30, 130) und ein zweites, äußeres Hakenelement (32, 132) vorhanden ist, so dass eine Metallschiene (34, 36) zwischen dem ersten Hakenelement (30, 130) und dem zweiten Schenkel (28, 128) oder zwischen dem zweiten Hakenelement (32, 132) und dem zweiten Schenkel (28, 128) klemmend haltbar ist,
- der Abstand des zweiten Schenkels (28, 128) zu dem ersten, inneren Hakenelement (30, 130) geringer ist als der Abstand des zweiten Schenkels (28, 128) zu dem zweiten, äußeren Hakenelement (32, 132).

2. Bauteilhalter nach Anspruch 1,
- **dadurch gekennzeichnet, dass**
- das erste, innere Hakenelement (30) eine Sollbruchstelle (38) aufweist, die vorzugsweise im Anschlussbereich des Hakenelements (30) an dem ersten Schenkel (26) angeordnet ist.

3. Bauteilhalter nach Anspruch 1 oder 2,
- **dadurch gekennzeichnet, dass**
- an dem zweiten Schenkel (28, 128) zumindest ein Befestigungselement (40, 44, 140, 144) zur Fixierung des Bauteilhalters (10, 70, 80, 100, 110, 120) an der Metallschiene (34, 36) vorhanden ist.

4. Bauteilhalter nach Anspruch 3,
- **dadurch gekennzeichnet, dass**
- das Befestigungselement zumindest einen Durchbruch (40, 140) für eine Schraubbefestigung aufweist.

5. Bauteilhalter nach Anspruch 3 oder 4,
- **dadurch gekennzeichnet, dass**
- das Befestigungselement zumindest einen nach innen weisenden Rastzapfen (44, 144) aufweist, der in eine frontseitige Aussparung (46, 48) einer Metallschiene (34, 36) einsteckbar ist.

6. Bauteilhalter nach Anspruch 5,
- **dadurch gekennzeichnet, dass**
- der zumindest eine Rastzapfen (144) an einer federnden Kragzunge (150) angeformt ist,
- der zumindest eine Rastzapfen (144) eine erste Außenkontur (146) und eine zweite Außenkontur (148) aufweist, wobei die erste Außenkontur (146) im Anschlussbereich der federnden Kragzunge (150) vorhanden ist.

7. Bauteilhalter nach Anspruch 6,
- **dadurch gekennzeichnet, dass**
- die federnde Kragzunge (150) etwa oberhalb des Rastzapfens (144) ein Betätigungselement (152), insbesondere eine Nut (152), aufweist.

8. Bauteilhalter nach einem der vorstehenden Ansprüche,
- **dadurch gekennzeichnet, dass**
- an dem ersten Schenkel (126) zumindest ein Befestigungselement (154) zur Fixierung des Bauteilhalters (120) an der Metallschiene (34, 36) vorhanden ist,
- das Befestigungselement (154) zwischen dem zweiten Schenkel (128) und dem ersten, inneren Hakenelement (130) angeordnet ist.

9. Bauteilhalter nach Anspruch 8,
- **dadurch gekennzeichnet, dass**
- das Befestigungselement (154) zumindest einen nach innen weisenden Rastzapfen (154) aufweist, der in eine seitliche Aussparung (156) einer Metallschiene (34, 36) einsteckbar ist.

10. Bauteilhalter nach einem der vorstehenden Ansprüche,
- **dadurch gekennzeichnet, dass**
- das erste, innere Hakenelement (130) als Kragsteg ausgebildet ist,
- das zweite, äußere Hakenelement (132) eine zum zweiten Schenkel (128) weisende Umbiegung (139) aufweist,
- der Kragsteg des ersten, inneren Hakenelements (130) im Vergleich zum zweiten, äußeren Hakenelement (132) zurückversetzt angeordnet ist,
- zumindest eine federnde Zunge (136) vorhanden ist, die im Bereich des ersten Schenkels (126) angeordnet ist und zwischen dem zweiten Schenkel (128) und dem ersten, inneren Hakenelement (130) verläuft,
- die federnde Zunge (136) eine Hakenumbiegung (134) aufweist, die auf der Höhe des ersten, inneren Hakenelements (130) angeordnet ist.

11. Bauteilhalter nach einem der vorstehenden Ansprüche,
- **dadurch gekennzeichnet, dass**
- die zumindest eine Befestigungseinheit (12) als C-förmige Wellrohraufnahme (12) ausgebildet ist.

12. Bauteilhalter nach Anspruch 11,
- **dadurch gekennzeichnet, dass**
- die C-förmige Wellrohraufnahme (12) zumindest eine umlaufende Profilfeder (16) aufweist.

13. Bauteilhalter nach Anspruch 11 oder 12,
- **dadurch gekennzeichnet, dass**
- an zumindest einem der beiden Schenkel (20, 22) der Wellrohraufnahme (12) zumindest ein Kabelhalter (50, 52) vorhanden ist, der vorzugsweise einteilig an dem zumindest einen Schenkel (20, 22) der Wellrohraufnahme (12) angeformt ist.

14. Bauteilhalter nach einem der Ansprüche 1 bis 10,
- **dadurch gekennzeichnet, dass**
- die zumindest eine Befestigungseinheit (72, 82) als Lochraster-Platte (72, 82) ausgebildet ist.

15. Bauteilhalter nach einem der Ansprüche 1 bis 10,
- **dadurch gekennzeichnet, dass**
- die zumindest eine Befestigungseinheit (102, 112) als Hutschiene (112) oder als T-Schiene (102) ausgebildet ist.

16. Bauteilhalter nach Anspruch 15,
- **dadurch gekennzeichnet, dass**
- die Hutschiene (112) oder die T-Schiene (102) parallel zu dem zweiten Schenkel (28, 128) des Halteelements (24, 124) ausgerichtet ist.

17. Bauteilhalter nach Anspruch 15 oder 16,
- **dadurch gekennzeichnet, dass**
- die Hutschiene (112) oder die T-Schiene (102) in Verlängerung des zweiten Schenkels (28, 128) des Halteelements (24, 124) angeordnet sind.

18. Bauteilhalter nach einem der Ansprüche 1 bis 10,
- **dadurch gekennzeichnet, dass**
- die zumindest eine Befestigungseinheit (122) als Hutschienenhalter (122) ausgebildet ist.

19. Bauteilhalter nach Anspruch 18,
- **dadurch gekennzeichnet, dass**,
- der Hutschienenhalter (122) zwei seitliche Führungsnute (160, 162) aufweist, in denen jeweils ein Rand einer Hutschiene positionierbar ist,
- eine der beiden seitlichen Führungsnute (160) stationär ausgebildet ist,
- die andere der beiden seitlichen Führungsnute (162) einen beweglichen Rasthaken (164) aufweist, durch den die Oberseite der Führungsnut (162) gebildet wird.

20. Bauteilhalter nach Anspruch 19,
- **dadurch gekennzeichnet, dass**
- der bewegliche Rasthaken (164) eine Rastnase (166) mit einer konvexen Außenkontur (166) aufweist.

21. Bauteilhalter nach einem der vorstehenden Ansprüche,
- **dadurch gekennzeichnet, dass**
- an dem ersten Schenkel (26, 126) des Halteelements (24, 124) eine zweite Befestigungseinheit (88) angeordnet ist.

22. Bauteilhalter nach Anspruch 21,
- **dadurch gekennzeichnet, dass**
- die zweite Befestigungseinheit (88) zumindest eine Nut (88) und/oder zumindest eine Feder einer Nut-Feder-Verbindung aufweist.

## Claims

1. Component holder (10, 70, 80, 100, 110, 120) for fastening electromechanical components (14, 54, 56, 74, 90, 106, 112) to a metal rail (34, 36),
- having at least one fastening unit (12, 50, 52, 72, 82, 88, 102, 112, 122) for an electromechanical component (14, 54, 56, 74, 90, 106),
- having at least one holding element (24, 124) of approximately L-shaped form by means of which the component holder (10, 70, 80, 100, 110, 120) is fixable to the metal rail (34, 36), wherein the holding element (24, 124) has a first leg (26, 126) and a second leg (28, 128),
wherein
- at least one first, inner hook element (30, 130) and one second, outer hook element (32, 132) are provided on the first leg (26, 126) such that a metal rail (34, 36) is holdable in a clamping manner between the first hook element (30, 130) and the second leg (28, 128) or between the second hook element (32, 132) and the second leg (28, 128),
- the distance of the second leg (28, 128) from the first, inner hook element (30, 130) is smaller than the distance of the second leg (28, 128) from the second, outer hook element (32, 132).

2. Component holder according to Claim 1,
- **characterized in that**
- the first, inner hook element (30) has a predetermined breaking point (38), which is preferably arranged in the connection region of the hook element (30) at the first leg (26).

3. Component holder according to Claim 1 or 2,
- **characterized in that**
- at least one fastening element (40, 44, 140, 144) used for fixing the component holder (10, 70, 80, 100, 110, 120) to the metal rail (34, 36) is provided at the second leg (28, 128).

4. Component holder according to Claim 3,
- **characterized in that**
- the fastening element has at least one aperture (40, 140) for screwed fastening.

5. Component holder according to Claim 3 or 4,
- **characterized in that**
- the fastening element has at least one inwardly directed latching peg (44, 144) which is pluggable into a front-side cutout (46, 48) of a metal rail (34, 36).

6. Component holder according to Claim 5,
- **characterized in that**
- the at least one latching peg (144) is formed on a resilient extension tongue (150),
- the at least one latching peg (144) has a first outer contour (146) and a second outer contour (148), wherein the first outer contour (146) is provided in the connecting region of the resilient extension tongue (150).

7. Component holder according to Claim 6,
- **characterized in that**
- the resilient extension tongue (150) has an actuating element (152), in particular a groove (152), approximately above the latching peg (144).

8. Component holder according to one of the preceding claims,
- **characterized in that**
- at least one fastening element (154) for fixing the component holder (120) to the metal rail (34, 36) is provided on the first leg (126).
- the fastening element (154) is arranged between the second leg (128) and the first, inner hook element (130).

9. Component holder according to Claim 8,
- **characterized in that**
- the fastening element (154) has at least one inwardly directed latching peg (154) which is pluggable into a lateral cutout (156) of a metal rail (34, 36).

10. Component holder according to one of the preceding claims,
- **characterized in that**
- the first, inner hook element (130) is in the form of an extension web,
- the second, outer hook element (132) has a bend (139) which is directed towards the second leg (128),
- the extension web of the first, inner hook element (130) is arranged set back in comparison with the second, outer hook element (132),
- there is provided at least one resilient tongue (136) which is arranged in the region of the first leg (126) and which extends between the second leg (128) and the first, inner hook element (130),
- the resilient tongue (136) has a hook bend (134) which is arranged at the height of the first, inner hook element (130).

11. Component holder according to one of the preceding claims,
- **characterized in that**
- the at least one fastening unit (12) is in the form of a C-shaped corrugated-tube-receiving means (12).

12. Component holder according to Claim 11,
- **characterized in that**
- the C-shaped corrugated-tube-receiving means (12) has at least one encircling profile spring (16)

13. Component holder according to Claim 11 or 12,
- **characterized in that**
- at least one cable holder (50, 52) is provided on at least one of the two legs (20, 22) of the corrugated-tube-receiving means (12) and, preferably, is formed integrally on the at least one leg (20, 22) of the corrugated-tube-receiving means (12),

14. Component holder according to one of Claims 1 to 10,
- **characterized in that**
- the at least one fastening unit (72, 82) is in the form of a perforated-grid plate (72, 82).

15. Component holder according to one of Claims 1 to 10,
- **characterized in that**
- the at least one fastening unit (102, 112) is in the form of a top-hat rail (112) or in the form of a T-shaped rail (102).

16. Component holder according to Claim 15,
- **characterized in that**
- the top-hat rail (112) or the T-shaped rail (102) is aligned parallel to the second leg (28, 128) of the holding element (24, 124).

17. Component holder according to Claim 15 or 16,
- **characterized in that**
- the top-hat rail (112) or the T-shaped rail (102) is arranged in a continuation of the second leg (28, 128) of the holding element (24, 124).

18. Component holder according to one of Claims 1 to 10,
- **characterized in that**
- the at least one fastening unit (122) is in the form of a top-hat-rail holder (122).

19. Component holder according to Claim 18,
- **characterized in that**
- the top-hat-rail holder (122) has two lateral guide grooves (160, 162) in which in each case one edge of a top-hat rail is positionable,
- one of the two lateral guide grooves (160) is configured to be stationary,
- the other of the two lateral guide grooves (162) has a movable latching hook (164) which forms the top side of the guide groove (162).

20. Component holder according to Claim 19,
- **characterized in that**
- the movable latching hook (164) has a latching nose (166) with a convex outer contour (166).

21. Component holder according to one of the preceding claims,
- **characterized in that**
- a second fastening unit (88) is arranged on the first leg (26, 126) of the holding element (24, 124).

22. Component holder according to Claim 21,
- **characterized in that**
- the second fastening unit (88) has at least one groove (88) and/or at least one tongue of a tongue-and-groove connection.

## Revendications

1. Porte-composants (10, 70, 80, 100, 110, 120) destiné à la fixation de composants électromécaniques (14, 54, 56, 74, 90, 106, 112) sur un rail métallique (34, 36),
- comportant au moins une unité de fixation (12, 50, 52, 72, 82, 88, 102, 112, 122) pour un composant électromécanique (14, 54, 56, 74, 90, 106),
- comportant au moins un élément de retenue (24, 124) approximativement en forme de L, au moyen duquel le porte-composants (10, 70, 80, 100, 110, 120) peut être fixé au rail métallique (34, 36), l'élément de maintien (24, 124) comportant une première branche (26, 126) et une seconde branche (28, 128)
dans lequel
- il est prévu au moins un premier élément formant crochet intérieur (30, 130) et un second élément formant crochet extérieur (32, 132) sur la première branche (26, 126), de sorte qu'un rail métallique (34, 36) peut être maintenu de manière serrée entre le premier élément formant crochet (30, 130) et la seconde branche (28, 128) ou entre le second élément formant crochet (32, 132) et la seconde branche (28, 128),
- la distance entre la seconde branche (28, 128) et le premier élément formant crochet intérieur (30, 130) est inférieure à la distance entre la seconde branche (28, 128) et le second élément formant crochet extérieur (32, 132).

2. Porte-composants selon la revendication 1,
- **caractérisé en ce que**
- le premier élément formant crochet intérieur (30) présente un point de rupture nominal (38) qui est de préférence disposé dans la zone de liaison de l'élément formant crochet (30) sur la première branche (26).

3. Porte-composants selon la revendication 1 ou 2,
- **caractérisé en ce que**
- il est prévu au niveau de la seconde branche (28, 128) au moins un élément de fixation (40, 44, 140, 144) destiné à la fixation du porte-composants (10, 70, 80, 100, 110, 120) au rail métallique (34, 36).

4. Porte-composants selon la revendication 3,
- **caractérisé en ce que**
- l'élément de fixation présente au moins une ouverture (40, 140) pour une fixation par vis.

5. Porte-composants selon la revendication 3 ou 4,
- **caractérisé en ce que**
- l'élément de fixation comporte au moins une broche d'encliquetage (44, 144) dirigée vers l'intérieur, qui peut être insérée dans une découpe frontale (46, 48) d'un rail métallique (34, 36).

6. Porte-composants selon la revendication 5,
- **caractérisé en ce que**
- ladite au moins une broche d'encliquetage (144) est formée sur une languette en porte-à-faux élastique (150),
- ladite au moins une broche d'encliquetage (144) présente un premier contour extérieur (146) et un second contour extérieur (148), le premier contour extérieur (146) étant situé dans la zone de liaison de la languette en porte-à-faux élastique (150).

7. Porte-composants selon la revendication 6,
- **caractérisé en ce que**
- la languette en porte-à-faux élastique (150) comporte un élément d'actionnement (152), en particulier une rainure (152), située approximativement au-dessus de la broche d'encliquetage (144).

8. Porte-composants selon l'une quelconque des revendications précédentes,
- **caractérisé en ce que**
- il est prévu au niveau de la première branche (126) au moins un élément de fixation (154) destiné à la fixation du porte-composants (120) au rail métallique (34, 36),
- l'élément de fixation (154) est disposé entre la seconde branche (128) et le premier élément formant crochet intérieur (130).

9. Porte-composants selon la revendication 8,
- **caractérisé en ce que**
- l'élément de fixation (154) comporte au moins une broche d'encliquetage (154) dirigée vers l'intérieur, qui peut être insérée dans une découpe latérale (156) d'un rail métallique (34, 36).

10. Porte-composants selon l'une quelconque des revendications précédentes,
- **caractérisé en ce que**
- le premier élément formant crochet intérieur (130) est réalisé sous la forme d'une traverse en porte-à-faux,
- le second élément formant crochet extérieur (132) présente un coude (139) dirigé vers la seconde branche (128),
- la traverse en porte-à-faux du premier élément formant crochet intérieur (130) est disposée en retrait par rapport au second élément formant crochet extérieur (132),
- il est prévu au moins une languette élastique (136) disposée dans la zone de la première branche (126) et s'étendant entre la seconde branche (128) et le premier élément formant crochet intérieur (130),
- la languette élastique (136) présente un coude formant crochet (134) qui est disposé à la hauteur du premier élément formant crochet intérieur (130).

11. Porte-composants selon l'une quelconque des revendications précédentes,
- **caractérisé en ce que**
- ladite au moins une unité de fixation (12) est réalisée sous la forme d'un réceptacle de tube ondulé en forme de C (12).

12. Porte-composants selon la revendication 11,
- **caractérisé en ce que**
- le réceptacle de tube ondulé en forme de C (12) comporte au moins un ressort profilé circonférentiel (16).

13. Porte-composants selon la revendication 11 ou 12,
- **caractérisé en ce que**
- il est prévu au niveau d'au moins l'une des deux branches (20, 22) du réceptacle de tube ondulé (12) au moins un support de câble (50, 52) qui est de préférence formé d'une seule pièce sur ladite au moins une branche (20, 22) du réceptacle de tube ondulé (12).

14. Porte-composants selon l'une quelconque des revendications 1 à 10,
- **caractérisé en ce que**
- ladite au moins une unité de fixation (72, 82) est réalisée sous la forme d'une plaque à grille perforée (72, 82).

15. Porte-composants selon l'une quelconque des revendications 1 à 10,
- **caractérisé en ce que**
- ladite au moins une unité de fixation (102, 112) est réalisée sous la forme d'un rail chapeau (112) ou d'un rail en T (102).

16. Porte-composants selon la revendication 15,
- **caractérisé en ce que**
- le rail chapeau (112) ou le rail en T (102) est orienté parallèlement à la seconde branche (28, 128) de l'élément de maintien (24, 124).

17. Porte-composants selon la revendication 15 ou 16,
- **caractérisé en ce que**
- le rail chapeau (112) ou le rail en T (102) est disposé dans le prolongement de la seconde branche (28, 128) de l'élément de maintien (24, 124).

18. Porte-composants selon l'une quelconque des revendications 1 à 10,
- **caractérisé en ce que**
- ladite au moins une unité de fixation (122) est réalisée sous forme de support de rail chapeau (122).

19. Porte-composants selon la revendication 18,
- **caractérisé en ce que**
- le support de rail chapeau (122) comporte deux canaux de guidage latéraux (160, 162) dans chacun desquels peut être positionné un bord d'un rail chapeau,
- l'une des deux rainures de guidage latérales (160) est réalisée de manière stationnaire,
- l'autre des deux rainures de guidage latérales (162) comporte un crochet d'encliquetage mobile (164) au moyen duquel est formée la face supérieure de la rainure de guidage (162).

20. Porte-composants selon la revendication 19,
- **caractérisé en ce que**
- le crochet d'encliquetage mobile (164) présente un ergot d'encliquetage (166) ayant un contour extérieur convexe (166).

21. Porte-composants selon l'une quelconque des revendications précédentes,
- **caractérisé en ce que**
- une seconde unité de fixation (88) est disposée sur la première branche (26, 126) de l'élément de maintien (24, 124).

22. Porte-composants selon la revendication 21,
- **caractérisé en ce que**
- la seconde unité de fixation (88) présente au moins une rainure (88) et/ou au moins un ressort d'une liaison par rainure-ressort.
